# EUROPÄISCHE PATENTSCHRIFT

(11) **EP 0 442 103 B1**
(45) Veröffentlichungstag und Bekanntmachung des Hinweises auf die Patenterteilung: **27.07.1994**
(21) Anmeldenummer: 90124547.2
(22) Anmeldetag: 18.12.1990
(51) Int. Cl.: B30B 9/30, A01F 15/14

(54) **Ballenpresse mit Knoterapparat**
Balling press with knotter
Presse à balles avec noueur

(30) Priorität: 16.02.1990 DE 4004905
(43) Veröffentlichungstag der Anmeldung: 21.08.1991
(73) Patentinhaber: CLAAS OHG, D-33426 Harsewinkel (DE)
(72) Erfinder: Tertilt, Werner, W-4834 Marienfeld (DE)

(56) Entgegenhaltungen:
- DE-A- 2 111 894
- DE-A- 2 745 864
- FR-A- 2 258 311
- US-A- 2 037 039
- US-A- 2 887 947
- US-A- 2 910 932
- US-A- 4 095 520

## Beschreibung

Die vorliegende Erfindung betrifft eine Ballenpresse mit allseits geschlossenem Preßkanal, wobei zumindest eine Kanalwand als Preßklappe ausgebildet ist und einem dem Preßkanal zugeordnetem Knoterapparat, wobei die dem Knoterapparat benachbarte Wand des Preßkanals eine insgesamt höhere Reibung auf einen Preßballen ausübt, als die dieser Wand gegenüberliegende.

Bei bekannten Pressen ist der Knoterapparat am Eingang des Preßkanals oberhalb der oberen Preßkanalwand angeordnet. Das vom Preßkolben schubweise in den Kanal gepreßte Stroh zieht dabei einen von oben nach unten vor dem Preßkanaleingang eingespannten Garnstrang sukzessive mit in den Preßkanal, so daß der Ballen bei seiner Bildung stirnseitig und oben wie unten von einem Garnstrang umschlungen wird. Sobald der Ballen seine gewünschte Größe erreicht, wird der untere Garnstrang in an sich bekannter Weise durch eine Bindenadel nach oben in den Knoter gelegt, wo dann die Verknotung der beiden Garnstrangenden miteinander stattfindet. Aufgrund der Tatsache, daß sich der Knoten aus bauraumtechnischen Gründen nicht unmittelbar am Ballen, sondern nur in einem darüberliegenden Bereich bilden läßt, entsteht oberhalb des Ballens eine sogenannte "Garnlose". Diese Garnlose bewirkt, daß der Ballen beim Verlassen des Preßkanales in seinem oberen Bereich weiter expandieren kann als in seinem unteren Bereich, so daß der ausgeworfene Ballen nicht mehr kantengerade ist. Hieraus ergeben sich hinsichtlich der späteren Stapelung gepreßter Ballen erhebliche Schwierigkeiten. Um diese Schwierigkeiten zu vermeiden, ist es aus der amerikanischen Patentschrift 4 095 520 bekannt, das Auslaufende der Kanalwand, die dem Knoterapparat zugeordnet ist, als schwenkbare Klappe auszubilden, um zu erreichen, daß die Preßkanalwand eine ingesamt höhere Reibung auf einen Preßballen ausübt, als die dieser Wand gegenüberliegende. Um dies zu erreichen, muß der schwenkbaren Wand allerdings eine Kolbenzylindereinheit zugeordnet werden, die mit entsprechendem Druck beaufschlagt werden muß. So zu verfahren, stellt eine wirtschaftlich sehr aufwendige Möglichkeit dar.

Der vorliegenden Erfindung liegt daher das Problem zugrunde, eine Ballenpresse der eingangs näher bezeichneten Art so auszugestalten, daß trotz der beim Knotervorgang nicht vermeidenden Garnlose kantengerechte Preßballen auf einfache Art und Weise erzeugt werden können. Dies wird dadurch erreicht, daß die dem Knoterapparat benachbarte Wand im Auslaufbereich des Preßkanals länger ist als die dieser Wand gegenüberliegende. Dabei hat es sich als vorteilhaft erwiesen, wenn die dem überstehenden Wandbereich des Preßkanal gegenüberliegende Preßkanalwand bereichsweise als Rollenbahn ausgebildet ist, deren Rollen freilaufend oder angetrieben angeordnet sind.

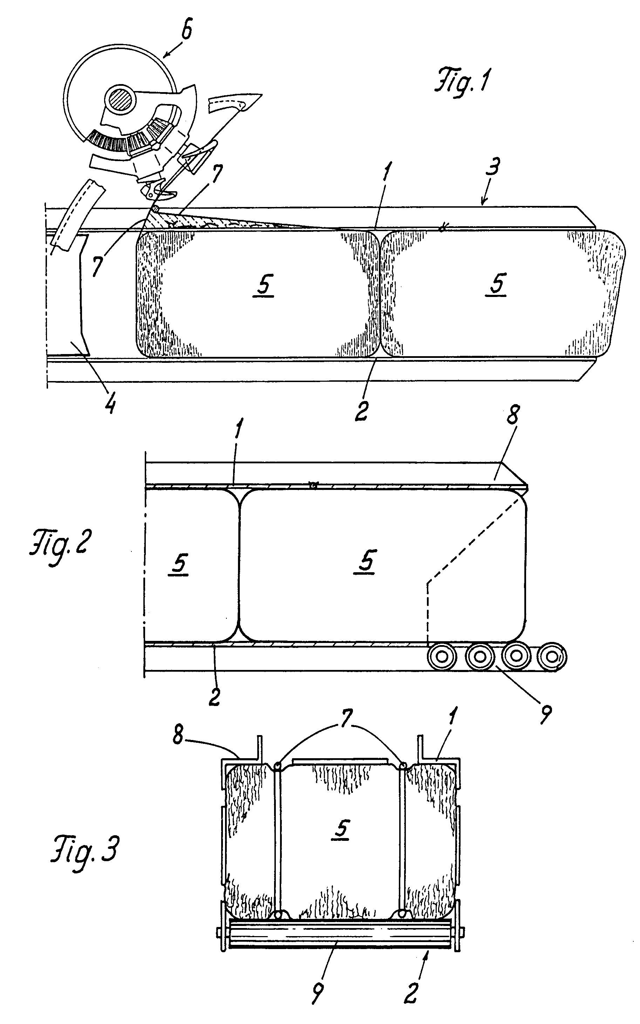

Im folgenden soll die Erfindung anhand eines Ausführungsbeispiels und mehrerer dieses schematisch darstellen der Figuren näher erläutert werden. Dabei zeigt:
- Fig. 1: einen Preßkanal bekannter Bauart,
- Fig. 2: einen Preßkanal nach der Erfindung und
- Fig. 3: einen Schnitt durch einen Preßkanal nach der Erfindung
Mit 1 ist die obere mit 2 die untere Wandung eines Preßkanals 3 einer nicht näher dargestellten Ballenpresse bezeichnet, in der Stroh durch einen hin- und hergehenden Preßkolben 4 zwecks Bildung eines Ballens 5 gepreßt wird. Oberhalb der Wand 1 und am Eingang des Kanals 3 ist ein Knoterapparat 6 vorgesehen, durch den die Enden des einen Ballen umschlingenden Garnstranges 7 miteinander verknotet werden. Da der Knoten aus bauraumtechnischen Gründen nicht direkt am Ballen 5 selbst sondern oberhalb von diesem gebildet wird, entsteht eine Garnlose. Diese führt dazu, daß sich der austretende Ballen 5 im oberen stirnseitigen Bereich mehr ausdehnt als im unteren. Um dies zu vermeiden ist gemäß Fig. 2 die obere Kanalwand 1 gegenüber der unteren Wand 2 länger ausgebildet, wobei dem nach hinten überstehenden längeren Wandteil 8 gegenüberliegend eine Rollenbahn 9 angeordnet ist. Eine solche Ausgestaltung bewirkt, daß auf einen austretenden Ballen im oberen Bereich länger eine höhere Reibung ausgeübt wird als im unteren Bereich. Aufgrund dieser Tatsache verteilt sich die durch den oberhalb des Preßkanals angeordneten Knoters gebildete oberen Garnlose gleichmäßig um einen fertigen Ballen, so daß dieser nach Austritt aus dem Preßkanal kantengerade ist.

## Patentansprüche

1. Ballenpresse mit allseits geschlossenem Preßkanal,
wobei zumindest eine Kanalwand als Preßklappe ausgebildet ist und einen dem Preßkanal zugeordneten Knoterapparat, wobei die dem Knoterapparat (6) benachbarte Wand (1) des Preßkanals (3) eine insgesamt höhere Reibung auf einen Preßballen ausübt, als die dieser Wand (2) gegenüberliegende,
**dadurch gekennzeichnet**,
daß die dem Knoterapparat (6) benachbarte Wand (1) im Auslaufbereich des Preßkanals (3) länger ist, als die dieser Wand (1) gegenüberliegende.

2. Ballenpresse nach Anspruch 1,
**dadurch gekennzeichnet**,
daß die dem überstehenden Wandbereich (8) des Preßkanals (3) gegenüberliegende Preßkanalwand (2) bereichsweise als Rollenbahn (9) ausgebildet ist, deren Rollen freilaufend oder angetrieben angeordnet sind.

## Claims

1. A baling press having a pressing passage which is closed on all sides, at least one passage wall being in the form of a pressing flap, and a knotter associated with the pressing passage, wherein the wall (1) of the pressing passage (3) which is adjacent to the knotter (6) applies to a bale being pressed a level of friction which is overall higher than the wall (2) opposite said wall, characterised in that the wall (1) adjacent to the knotter (6) is longer in the discharge region of the pressing passage (3) than the wall opposite said wall (1).

2. A baling press according to claim 1 characterised in that the pressing passage wall (2) disposed opposite the projecting wall region (8) of the pressing passage (3) is formed in a region-wise inner as a roller track (9), the rollers of which are arranged to be free-running or driven.

## Revendications

1. Presse à balles comprenant un canal presseur fermé sur tous ses côtés, dans lequel au moins une paroi du canal est constituée sous forme d'un volet presseur, et un dispositif de nouage est associé au canal presseur, la paroi (1) du canal presseur (3) qui est voisine du dispositif de nouage (6) exerçant un frottement dans l'ensemble plus élevé sur une balle pressée que celle (2) qui est opposée à cette paroi,
caractérisée en ce que
la paroi (1) qui est voisine du dispositif de nouage (6) est plus longue dans la zone de sortie du canal presseur que celle qui est à l'opposé de cette paroi (1).

2. Presse à balles selon la revendication 1,
caractérisée en ce que
la paroi (2) du canal presseur qui est à l'opposé de la zone de paroi (8) en saillie du canal presseur (3) est réalisée partiellement sous forme d'une piste à rouleaux, dont les rouleaux sont montés de façon folle ou entraînée.
